# EUROPEAN PATENT APPLICATION

(11) **EP 4 300 673 A1**
(43) Date of publication of application: **03.01.2024**
(21) Application number: 22917706.8
(22) Date of filing: 04.01.2022
(51) Int. Cl.: H01M 50/169

(54) **BATTERY CELL, BATTERY, ELECTRIC DEVICE, AND METHOD AND DEVICE FOR MANUFACTURING BATTERY CELL**

(71) Applicant: Contemporary Amperex Technology Co., Limited, Ningde, Fujian 352100 (CN)
(72) Inventor: WU, Yizhen, Ningde, Fujian 352100 (CN); YANG, Jianxiong, Ningde, Fujian 352100 (CN); LI, Yanpeng, Ningde, Fujian 352100 (CN); LI, Yiming, Ningde, Fujian 352100 (CN); ZUO, Yongtao, Ningde, Fujian 352100 (CN); DU, Guodong, Ningde, Fujian 352100 (CN)
(74) Representative: Behr, Wolfgang
(86) International application number: PCT/CN2022/070164
(87) International publication number: WO 2023/130228

(57) **Abstract**

Embodiments of the present application provide a battery cell, a battery, an electrical device, and a method and a device for manufacturing a battery cell, and belong to the technical field of batteries. The battery cell comprises a housing, an electrode assembly, and an end cover. The electrode assembly is accommodated in the housing. The end cover is configured to buckle to the opening of the housing. The end cover comprises a first body part, a first end wall, and a first peripheral wall. The first body part is configured to connect the housing. The first end wall is farther from the electrode assembly than the first body part. The first peripheral wall is disposed around an edge of the first end wall and connected to the first body part, and the first peripheral wall and the first end wall jointly define a first accommodation space used to accommodate at least a part of a tab of the electrode assembly. The first peripheral wall comprises a first arc wall extending from the first end wall to the first body part along a first arc trajectory. The anti-damage capability of a connection position between the first peripheral wall and the first body part or a connection position between the first peripheral wall and the first end wall is improved, and the service life of the battery cell is prolonged.

## Description

### TECHNICAL FIELD

The present application relates to the technical field of batteries, and in particular to a battery cell, a battery, an electrical device, and a method and a device for manufacturing a battery cell.

### BACKGROUND

With development of new energy technology, batteries are more and more widely used in various fields, such as a mobile phone, a notebook computer, an electric bicycle, an electric vehicle, an electric airplane, an electric ship, an electric toy vehicle, an electric toy ship, an electric toy airplane, and an electric tool.

For a battery cell, it is necessary to consider both the safety of the battery cell and the performance of the battery cell, such as the service life of the battery cell. Therefore, how to increase the service life of the battery cell is a technical problem to be urgently resolved in the battery technology.

### SUMMARY

Embodiments of the present application provide a battery cell, a battery, an electrical device, and a method and a device for manufacturing a battery cell, so that the service life of the battery cell can be effectively prolonged.

According to a first aspect, an embodiment of the present application provides a battery cell. The battery cell comprises: a housing having an opening; an electrode assembly having a tab, wherein the electrode assembly is accommodated in the housing; and an end cover configured to buckle to the opening, wherein the end cover comprises: a first body part configured to connect the housing; a first end wall, wherein the first end wall is farther from the electrode assembly than the first body part in a thickness direction of the end cover; and a first peripheral wall disposed around an edge of the first end wall and connected to the first body part, wherein the first peripheral wall and the first end wall jointly define a first accommodation space used to accommodate at least a part of the tab; wherein the first peripheral wall comprises a first arc wall extending from the first end wall to the first body part along a first arc trajectory.

According to the above technical solution, the first arc wall of the first peripheral wall extends from the first end wall to the first body part along the first arc trajectory, so that the first end wall smoothly transits to the first body part through the first arc wall, the stress concentration caused by right-angle arrangement of the first peripheral wall and the first body part or right-angle arrangement of the first peripheral wall and the first end wall is improved, the anti-damage capability of a connection position between the first peripheral wall and the first body part or a connection position between the first peripheral wall and the first end wall is improved, and the service life of the battery cell is prolonged.

In some embodiments, an outer surface of the first arc wall is tangent to an outer surface of the first body part; and/or an inner surface of the first arc wall is tangent to an inner surface of the first body part.

According to the above technical solution, the outer surface of the first arc wall is tangent to the outer surface of the first body part, and the inner surface of the first arc wall is tangent to the inner surface of the first body part, so that the stress concentration at a connection position between the first arc wall and the first body part is not likely to occur, and the bursting pressure at a connection position between the first arc wall and the first body part is increased.

In some embodiments, a circle center of the first arc trajectory is located outside the battery cell.

According to the above technical solution, the circle center of the first arc trajectory is located outside the battery cell, so that the first arc wall is concave and bent toward inside the battery cell, and a space outside the battery cell that is occupied by the end cover is reduced; and meanwhile, a connection position between the first arc wall and the first body part is relatively smooth, and the stress concentration is not likely to occur at a connection position between the first arc wall and the first body part.

In some embodiments, a central angle of the first arc wall is not greater than 90 degrees.

According to the above technical solution, the central angle of the first arc wall is not greater than 90 degrees, so that the first end wall transits more gently to the first body part through the first arc wall.

In some embodiments, the first peripheral wall comprises two first arc walls, and the two first arc walls are arranged along a width direction of the end cover.

According to the above technical solution, the two first arc walls of the first peripheral wall are arranged along the width direction of the end cover, so that two ends that are of the first end wall and that are in the width direction of the end cover smoothly transit to the first body part through the two first arc walls, and the stress concentration is not likely to occur at a connection position between the first peripheral wall and the first body part in the width direction of the end cover.

In some embodiments, the two first arc walls are symmetrically distributed in the width direction.

According to the above technical solution, the two first arc walls are symmetrically distributed in the width direction of the end cover, so that the two first arc walls are the same in shape and size, the anti-damage capability of the connection positions between the two first arc walls and the first body part is basically same, and the anti-damage capability of the connection positions between the two first arc walls and the end wall is basically same.

In some embodiments, the battery cell further comprises: an insulation kit configured to separate the end cover and the electrode assembly.

According to the above technical solution, the insulation kit plays a role in separating the end cover from the electrode assembly so as to reduce the risk of a short circuit of a positive electrode and a negative electrode caused by the contact of the tab of the electrode assembly with the end cover.

In some embodiments, the insulation kit comprises: a second body part disposed on one side that is of the first body part and that faces the electrode assembly in the thickness direction; and a protrusion part extending from the second body part into the first accommodation space in a direction away from the electrode assembly, wherein a second accommodation space is formed inside the protrusion part, and the second accommodation space is configured to accommodate at least a part of the tab.

According to the above technical solution, the protrusion part of the insulation kit extends into the first accommodation space, which reduces the overall size of the insulation kit and the end cover in the thickness direction of the end cover, so that the structure of the insulation kit and the end cover is more compact. A second accommodation space is formed inside the protrusion part, at least a part of the tab is accommodated in the second accommodation space, and a space inside the housing that is occupied by the tab is reduced, so that more space is provided for a main body part of the electrode assembly, and the improvement of the energy density of the battery cell is facilitated.

In some embodiments, the protrusion part comprises: a second end wall, wherein the second end wall is farther from the electrode assembly than the second body part in the thickness direction; and a second peripheral wall disposed around an edge of the second end wall and connected to the second body part, wherein the second peripheral wall and the second end wall jointly define the second accommodation space; wherein the second peripheral wall comprises a second arc wall, and the second arc wall corresponds to the first arc wall and extends from the second end wall to the second body part along a second arc trajectory so as to avoid the tab.

According to the above technical solution, the second arc wall extends from the second end wall to the second body part along the second arc trajectory, and the arc structure of the second arc wall can avoid the tab, reducing the risk of the insulation kit squeezing the tab.

In some embodiments, the second arc wall attaches to the first arc wall.

According to the above technical solution, the second arc wall is attached to the first arc wall, which makes the second arc wall and the first arc wall more compact, increases the second accommodation space defined jointly by the second peripheral wall and the second end wall, and is more conducive to avoiding the tab by the second arc wall.

In some embodiments, the second peripheral wall comprises two second arc walls, and the two second arc walls are arranged along the width direction of the end cover, wherein one second arc wall is configured to avoid a tab that is on one side of the electrode assembly in the width direction, and the other second arc wall is configured to avoid a tab that is on the other side of the electrode assembly in the width direction.

According to the above technical solution, the two second arc walls of the second peripheral wall can avoid tabs that are on two sides of the electrode assembly in the width direction of the end cover, respectively, so that the tabs that are on two sides of the electrode assembly in the width direction of the end cover are not easily squeezed by the insulation kit.

In some embodiments, the first body part is welded to the housing.

According to the above technical solution, the first body part is connected to the housing in a welding mode, so that the firmness of the first body part after the first body part is connected to the housing is ensured, and meanwhile, the sealing performance between the first body part and the housing can be ensured.

According to a second aspect, an embodiment of the present application provides a battery. The battery comprises a battery cell provided in any one of the embodiments of the first aspect; and a box body configured to accommodate the battery cell.

According to a third aspect, an embodiment of the present application provides an electrical device. The electrical device comprises the battery provided in any one of the embodiments of the second aspect.

According to a fourth aspect, an embodiment of the present application provides a manufacturing method for a battery cell. The manufacturing method comprises: providing a housing having an opening; providing an electrode assembly having a tab; providing an end cover; accommodating the electrode assembly in the housing; and buckling the end cover to the opening; wherein the end cover comprises: a first body part configured to connect the housing; a first end wall, wherein the first end wall is farther from the electrode assembly than the first body part in a thickness direction of the end cover; and a first peripheral wall disposed around an edge of the first end wall and connected to the first body part, wherein the first peripheral wall and the first end wall jointly define a first accommodation space used to accommodate at least a part of the tab; wherein the first peripheral wall comprises a first arc wall extending from the first end wall to the first body part along a first arc trajectory.

According to a fifth aspect, an embodiment of the present application further provide a manufacturing device for a battery cell. The manufacturing device comprises: a first providing apparatus configured to provide a housing having an opening; a second providing apparatus configured to provide an electrode assembly having a tab; a third providing apparatus configured to provide an end cover; and an assembly apparatus configured to accommodate the electrode assembly in the housing and further configured to buckle the end cover to the opening; wherein the end cover comprises: a first body part configured to connect the housing; a first end wall, wherein the first end wall is farther from the electrode assembly than the first body part in a thickness direction of the end cover; and a first peripheral wall disposed around an edge of the first end wall and connected to the first body part, wherein the first peripheral wall and the first end wall jointly define a first accommodation space used to accommodate at least a part of the tab; wherein the first peripheral wall comprises a first arc wall extending from the first end wall to the first body part along a first arc trajectory.

### BRIEF DESCRIPTION OF THE DRAWINGS

In order to more clearly illustrate the technical solutions of embodiments of the present application, the drawings required in the embodiments will be briefly described below. It should be understood that the following drawings only illustrate some embodiments of the present application and therefore should not be considered as limitations of the scope, and for those of ordinary skill in the art, other related drawings can be obtained according to these drawings without creative efforts.
FIG. 1 is a schematic diagram of a structure of a vehicle according to some embodiments of the present application;
FIG. 2 is a schematic diagram of a structure of a battery according to some embodiments of the present application;
FIG. 3 is an exploded diagram of a battery cell according to some embodiments of the present application;
FIG. 4 is a partial sectional view of a battery cell shown in FIG. 3;
FIG. 5 is a sectional view of an end cover shown in FIG. 4;
FIG. 6 is a schematic diagram of a structure of an insulation kit shown in FIG. 4;
FIG. 7 is a flowchart of a manufacturing method for a battery cell according to some embodiments of the present application; and
FIG. 8 is a schematic block diagram of a manufacturing device for a battery cell according to some embodiments of the present application.

Reference numerals: 10: box body; 11: first part; 12: second part; 20: battery cell; 21: housing; 22: electrode assembly; 221: tab; 221a: positive electrode tab; 221b: negative electrode tab; 23: end cover; 231: first body part; 232: first end wall; 233: first peripheral wall; 2331: first arc wall; 2331a: first end; 2331b: second end; 234: first accommodation space; 24: insulation kit; 241: second body part; 242: protrusion part; 2421: second end wall; 2422: second peripheral wall; 2422a: second arc wall; 243: second accommodation space; 25: electrode terminal; 25a: positive electrode terminal; 25b: negative electrode terminal; 26: current collecting member; 27: pressure relief mechanism; 200: controller; 100: battery; 300: motor; 1000: vehicle; 2000: manufacturing device; 2100: first providing apparatus; 2200: second providing apparatus; 2300: third providing apparatus; 2400: assembly apparatus; x: length direction; y: width direction; and z: thickness direction.

### DETAILED DESCRIPTION OF THE EMBODIMENTS

To make the objectives, technical solutions, and advantages of embodiments of the present application clearer, the following clearly describes the technical solutions in embodiments of the present application with reference to the accompanying drawings in embodiments of the present application. It is clear that the described embodiments are merely some rather than all of embodiments of the present application. All other embodiments obtained by those of ordinary skill in the art based on embodiments of the present application without creative efforts shall fall within the protection scope of the present application.

Unless otherwise defined, all technical and scientific terms used in the present application have same meanings as those usually understood by those skilled in the art of the present application. The terms used in the specification of the present application are merely for the purpose of describing specific embodiments, and are not intended to limit the present application. The terms "comprising", "having", or any other variant thereof in the descriptions of the specification, claims, and above accompanying drawings of the present application are intended to cover a non-exclusive inclusion. In the specification, claims, and above accompanying drawings of the present application, terms "first", "second", and the like are intended to distinguish between different objects but do not indicate a particular sequential or chronological order.

An "embodiment" mentioned in the present application means that a particular characteristic, structure, or feature described with reference to embodiments may be included in at least one embodiment of the present application. The phrase shown in various locations in the specification may not necessarily refer to a same embodiment, and is not an independent or optional embodiment exclusive from another embodiment.

In descriptions of the present application, it should be noted that unless otherwise expressly specified and limited, terms "mount", "interconnect", "connect", and "attach" should be understood in a broad sense. For example, such terms may indicate a fixed connection, a detachable connection, or an integral connection; and may indicate direct interconnection, indirect interconnection through an intermediate medium, or internal communication between two elements. Those of ordinary skill in the art may understand specific meanings of the foregoing terms in the present application according to specific cases.

In the embodiments of the present application, same reference numerals indicate same components, and in the different embodiments, detailed descriptions of the same components are omitted for brevity. It should be understood that the thickness, length, width, and other dimensions of the various components in the embodiments of the present application and the overall thickness, length, width, and other dimensions of the integrated apparatus shown in the drawings are only illustrative and should not constitute any limitation on the present application.

In the present application, "a plurality" means more than two (including two).

In the present application, the battery cell may include a lithium-ion secondary battery, a lithium-ion primary battery, a lithium sulfur battery, a sodium lithium-ion battery, a sodium-ion battery, a magnesium-ion battery, or the like. This is not limited in the embodiments of the present application. The battery cell may be in the form of a cylinder, a flat body, a cuboid, or other shapes. This is not limited in the embodiments of the present application. Battery cells are generally divided into three types in a packaging manner: a cylindrical battery cell, a square battery cell, and a soft-pack battery cell. This is not limited in the embodiments of the present application.

The battery mentioned in the embodiments of the present application refers to a single physical module including one or more battery cells to provide higher voltage and capacity. For example, the battery mentioned in the present application may comprise a battery module, a battery pack, or the like. A battery generally comprises a housing for enclosing one or more battery cells. A box body can avoid liquid or other foreign matters to influence the charge or discharge of battery cells.

A battery cell comprises an electrode assembly and an electrolyte, wherein the electrode assembly comprises a positive electrode plate, a negative electrode plate, and a separator. A battery cell works primarily by moving metal ions between a positive electrode plate and a negative electrode plate. The positive electrode plate comprises a positive electrode current collector and a positive electrode active material layer, wherein the positive electrode active material layer is coated on a surface of the positive electrode current collector, the positive electrode current collector which is not coated with the positive electrode active material layer protrudes from the positive electrode current collector which is coated with the positive electrode active material layer, and the positive electrode current collector which is not coated with the positive electrode active material layer is used as a positive electrode tab. A lithium-ion battery is used as an example, the material of the positive electrode current collector may be aluminum, and the positive electrode active material may be lithium cobaltate, lithium iron phosphate, ternary lithium, lithium manganate, or the like. The negative electrode plate comprises a negative electrode current collector and a negative electrode active material layer, wherein the negative electrode active material layer is coated on a surface of the negative electrode current collector, the negative electrode current collector which is not coated with the negative electrode active material layer protrudes from the negative electrode current collector which is coated with the negative electrode active material layer, and the negative electrode current collector which is not coated with the negative electrode active material layer is used as a negative electrode tab. The material of the negative electrode current collector may be copper, and the negative electrode active material may be carbon, silicon, or the like. In order to ensure that the high current can be passed through without fusing, a plurality of positive electrode tabs are stacked together, and a plurality of negative electrode tabs are stacked together. The material of the separator may be PP (polypropylene) or PE (polyethylene). In addition, the electrode assembly may have a coiled structure or a laminated structure. The embodiment of the present application is not limited thereto.

At present, a battery cell generally comprises a housing, an electrode assembly, and an end cover; wherein the electrode assembly is accommodated in the housing, and an end cover is buckled to an opening of the housing to form a sealed space for accommodating the electrode assembly and an electrolyte together with the housing.

In order to improve the energy density of the battery cell, the end cover partially forms a convex hull structure. The end cover comprises a body part and a convex hull, the body part is connected to the housing, so that the whole end cover is buckled to the opening of the housing, and the convex hull protrudes from an outer surface of the body part. An accommodation space is formed inside the convex hull, the convex hull is provided with a peripheral wall and an end wall, the peripheral wall is disposed around an edge of the end wall, and the end wall is connected to the body part through the peripheral wall. At least a part of the tab is accommodated in the accommodation space so as to reduce the space occupied by the tab in the housing, and more space is reserved for the main body part of the electrode assembly, so that the energy density of the battery cell is improved.

The inventors have noted that, in such a battery cell, a connection position between the peripheral wall of the convex hull and the body part and a connection position between the peripheral wall of the convex hull and the end wall are likely to crack and break when the internal pressure of the battery cell does not reach the bursting pressure, consequently, the service life of the battery cell is affected.

The inventors have further studied and found that the reason why cracks are likely to occur at a connection position between the peripheral wall of the convex hull and the body part and a connection position between the peripheral wall of the convex hull and the end wall is that the right-angle arrangement of the peripheral wall of the convex hull and the main body and the right-angle arrangement of the peripheral wall of the convex hull and the end wall lead to the stress concentration at a connection position between the peripheral wall of the convex hull and the body part and a connection position between the peripheral wall of the convex hull and the end wall and insufficient bursting pressure, consequently, breakage is likely to occur when the internal pressure of the battery cell does not reach the bursting pressure.

In view of this, an embodiment of the present invention provides a battery cell, wherein at least a part of a peripheral wall of an end cover is provided as an arc wall, and the arc wall extends from an end wall of the end cover to a body part of the end cover along an arc trajectory.

In such a battery cell, the end wall of the end cover transits to the body part of the end cover through the arc wall, so that the stress concentration caused by the right-angle arrangement of the peripheral wall and the body part or the right-angle arrangement of the peripheral wall and the end wall is improved, the anti-damage capability of a connection position between the peripheral wall and the body part or a connection position between the peripheral wall and the end wall is improved, and the service life of the battery cell is prolonged.

The battery cell described in the embodiment of the present application is applicable to a battery and an electrical device using the battery.

The electrical device can be a vehicle, a mobile phone, a portable device, a notebook computer, a ship, a spacecraft, an electric toy, an electric tool, and the like. The vehicle can be a fuel vehicle, a gas vehicle, or a new energy vehicle, wherein the new energy vehicle can be a pure electric vehicle, a hybrid electric vehicle, a programmable vehicle, or the like; the spacecraft comprises an aircraft, a rocket, a space shuttle, a spacecraft, and the like; the electric toys include a stationary or mobile electric toy such as a game console, an electric vehicle toy, an electric ship toy, an electric airplane toy, and the like; and the electric tools include a metal cutting electric tool, a grinding electric tool, an assembly electric tool, and an electric tool for railways, such as an electric drill, an electric grinder, an electric wrench, an electric screwdriver, an electric hammer, an electric impact drill, a concrete vibrator, and an electric planer. The foregoing electrical device is not specially limited in the embodiment of the present application.

For ease of description, the following embodiments will be described by taking an electrical device as an example of a vehicle.

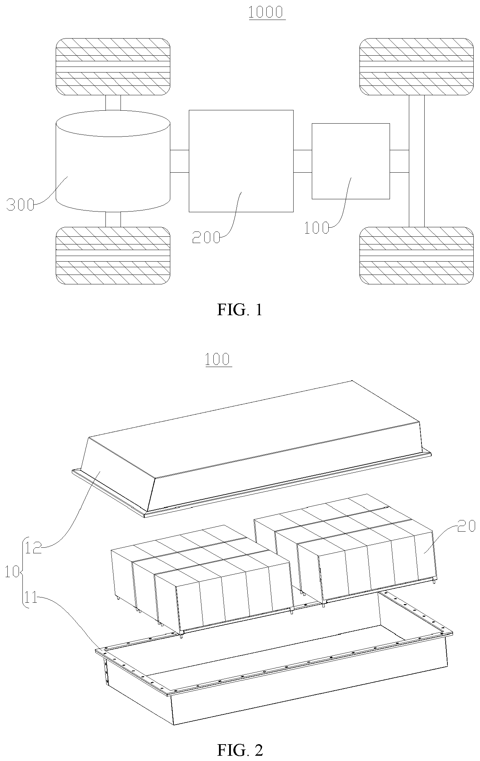

Referring to FIG. 1, FIG. 1 is a schematic diagram of a structure of a vehicle 1000 according to some embodiments of the present application, where a battery 100 is disposed inside the vehicle 1000, and the battery 100 may be disposed at a bottom, a head, or a tail of the vehicle 1000. The battery 100 may be configured to supply power to the vehicle 1000, for example, the battery 100 may serve as an operation power supply of the vehicle 1000.

The vehicle 1000 may further comprise a controller 200 and a motor 300, wherein the controller 200 is configured to control the battery 100 to supply power to the motor 300, for example, configured for power requirements for operation during starting, navigation, and traveling of the vehicle 1000.

In some embodiments of the present application, the battery 100 may not only be used as an operation power supply for the vehicle 1000, but also be used as a drive power supply for the vehicle 1000, replacing or partially replacing fuel oil or natural gas to provide drive power for the vehicle 1000.

Referring to FIG. 2, FIG. 2 is a schematic diagram of a structure of a battery 100 according to some embodiments of the present application, where the battery 100 comprises a box body 10 and a battery cell 20, and the box body 10 is configured to accommodate the battery cell 20.

The box body 10 is a component for accommodating the battery cell 20, the box body 10 provides an accommodation space for the battery cell 20, and the box body 10 may be of various structures. In some embodiments, the box body 10 may comprise a first part 11 and a second part 12, and the first part 11 and the second part 12 are buckled to each other to define an accommodation space for accommodating the battery cell 20. The first part 11 and second part 12 may be in various shapes, such as a cuboid and a cylinder. The first part 11 may be of a hollow structure with one side open, the second part 12 may also be of a hollow structure with one side open, and the open side of the second part 12 is buckled to the open side of the first part 11, thereby forming a box body 10 having an accommodation space. Or, the first part 11 may be of a hollow structure with one side opened, the second part 12 may be of a plate structure, and the second part 12 is buckled to the open side of the first part 11 to form a box body 10 having an accommodation space. The first part 11 and the second part 12 may be sealed by a sealing element, and the sealing element may be a sealing ring, a sealing adhesive, or the like.

In the battery 100, one or more battery cells 20 may be provided. If a plurality of battery cells 20 are provided, the plurality of battery cells 20 may be connected in series, in parallel, or in series-parallel, where the series-parallel connection refers to that the plurality of battery cells 20 are connected both in series and in parallel. A plurality of battery cells 20 may be connected in series, in parallel, or in series-parallel to form a battery module, and then a plurality of battery modules may be connected in series, in parallel, or in series-parallel to form an entirety which is accommodated in the box body 10. Or, all the battery cells 20 may be directly connected in series, in parallel or in series-parallel, and the entirety formed by all the battery cells 20 is accommodated in the box body 10.

In some embodiments, the battery 100 may further comprise a combiner component, and the plurality of battery cells 20 may be electrically connected to each other through the combiner component, so as to connect the plurality of battery cells 20 in series, in parallel or in series-parallel. The combiner component may be a metal conductor, such as copper, iron, aluminum, stainless steel, or aluminum alloy.

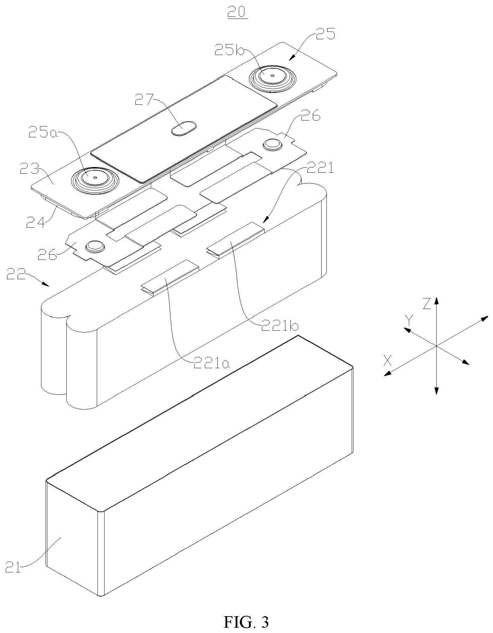

Referring to FIG. 3, FIG. 3 is an exploded diagram of a battery cell 20 according to some embodiments of the present application, where the battery cell 20 comprises a housing 21, an electrode assembly 22, an end cover 23, and an insulation kit 24.

The housing 21 is a component configured to accommodate the electrode assembly 22, and the housing 21 may be of a hollow structure with one end opened or two opposite ends opened. The housing 21 may be in various shapes, such as a cylinder and a cuboid. The housing 21 may be made of various materials, such as copper, iron, aluminum, steel, and aluminum alloy.

The electrode assembly 22 is a component where electrochemical reactions occur in the battery cell 20. The electrode assembly 22 has tabs 221, and the tabs 221 are classified into a positive electrode tab 221a and a negative electrode tab 221b, and the positive electrode tab 221a and the negative electrode tab 221b may be located on the same side of the electrode assembly 22, or may be located on two opposite sides of the electrode assembly 22.

The end cover 23 is a component that is buckled to an opening of the housing 21 to separate an internal environment of the battery cell 20 from an external environment. The shape of the end cover 23 may be adapted to the shape of the housing 21, for example, the housing 21 is of a cuboid structure, the end cover 23 is of a rectangular plate adapted to the housing 21, and for example, the housing 21 is of a cylinder structure, and the end cover 23 is of a circular plate adapted to the housing 21. The end cover 23 may be made of various materials, such as copper, iron, aluminum, steel, and aluminum alloy.

The end cover 23 may be provided with an electrode terminal 25, and the electrode terminal 25 is configured to electrically connect with the tab 221 to output the electric energy of the battery cell 20. The electrode terminals 25 may include a positive electrode terminal 25a and a negative electrode terminal 25b, wherein the positive electrode terminal 25a is configured to electrically connect to the positive electrode tab 221a, and the negative electrode terminal 25b is configured to electrically connect to the negative electrode tab 221b. The positive electrode terminal 25a and the negative electrode terminal 25b may be provided on the same end cover 23, or may be provided on different end covers 23. For example, the housing 21 is of a hollow structure with openings formed at two ends, two end covers 23 are provided in the battery cell 20, the two end covers 23 are correspondingly buckled to the two openings of the housing 21, the negative electrode terminal 25b is provided on one end cover 23, and the positive electrode terminal 25a is provided on the other end cover 23. For another example, as shown in FIG. 3, the housing 21 is of a hollow structure with an opening formed at one end, one end cover 23 is provided in the battery cell 20, and the negative electrode terminal 25b and the positive electrode terminal 25a may be provided on the same end cover 23.

The positive electrode terminal 25a and the positive electrode tab 221a may be directly connected or indirectly connected, and the negative electrode terminal 25b and the negative electrode tab 221b may be directly connected or indirectly connected. For example, the positive electrode terminal 25a is electrically connected to the positive electrode tab 221a via one current collecting member 26, and the negative electrode terminal 25b is electrically connected to the negative electrode tab 221b via another current collecting member 26.

A pressure relief mechanism 27 may be further disposed on the end cover 23, and the pressure relief mechanism 27 is configured to relieve pressure inside the battery cell 20 when the pressure or temperature inside the battery cell 20 reaches a threshold. The pressure relief mechanism 27 may be a burst-proof valve, a burst-proof plate, a safety valve, and other components. In the case that the bursting pressure is insufficient at a local position of the end cover 23, when the pressure inside the battery cell 20 does not reach the pressure relief threshold of the pressure relief mechanism 27, the position of the end cover 23 with insufficient bursting pressure is broken, and the service life of the battery cell 20 is affected. The stronger the anti-damage capability at a certain position of the end cover 23, the greater the bursting pressure at this position.

The insulation kit 24 is a component for separating the end cover 23 from the electrode assembly 22, and the insulation kit 24 is configured to insulate and separate the end cover 23 from the electrode assembly 22, so that the risk of a short circuit of the positive electrode and the negative electrode caused by the contact of the tab 221 with the end cover 23 is reduced. The insulation kit 24 may be an insulating material such as plastic or rubber.

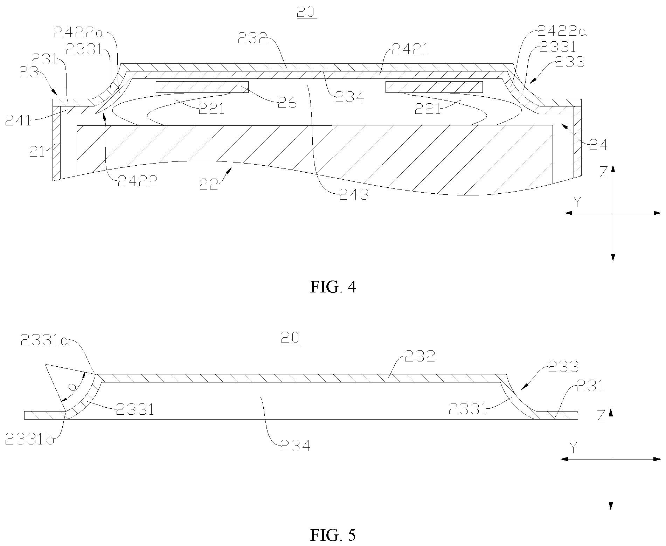

Referring to FIGs. 3 and 4, FIG. 4 is a partial sectional view of a battery cell 20 shown in FIG. 3. An embodiment of the present embodiment provides a battery cell 20, where the battery cell 20 comprises a housing 21, an electrode assembly 22, and an end cover 23. The housing 21 has an opening. The electrode assembly 22 has a tab 221, and the electrode assembly 22 is accommodated in the housing 21. The end cover 23 is configured to buckle to the opening. The end cover 23 comprises a first body part 231, a first end wall 232, and a first peripheral wall 233. The first body part 231 is configured to connect the housing 21. The first end wall 232 is farther from the electrode assembly 22 than the first body part 231 in a thickness direction Z of the end cover 23. The first peripheral wall 233 is disposed around an edge of the first end wall 232 and connected to the first body part 231, and the first peripheral wall 233 and the first end wall 232 jointly define a first accommodation space 234, wherein the first accommodation space 234 is used to accommodate at least a part of a tab 221. The first peripheral wall 233 comprises a first arc wall 2331, wherein the first arc wall 2331 extends from the first end wall 232 to the first body part 231 along a first arc trajectory.

The first body part 231 is a part where the end cover 23 is connected to the housing 21, and the first body part 231 may be welded to the housing 21 with a welding trajectory extending in an opening direction of the housing 21. The first body part 231 may be of a plate structure, for example, the first body part 231 may be of a circular plate, a rectangular plate, or the like. If the housing 21 is of a cylindrical structure, the first body part 231 may be of a circular plate; and if the housing 21 is of a cuboid structure, the first body part 231 may be of a circular plate. For example, in FIG. 3, the first body part 231 is of a rectangular plate.

The first end wall 232 and the first peripheral wall 233 are integrally formed as a convex hull protruding from the first body part 231, and the first body part 231, the first end wall 232, and the first peripheral wall 233 may be integrally formed. The first end wall 232 and the first peripheral wall 233 may be in various shapes, such as circular and rectangular. A part of the first peripheral wall 233 may be a first arc wall 2331, or the entire first peripheral wall 233 may be a first arc wall 2331. For example, if the first end wall 232 and the first peripheral wall 233 are circular, the entire first peripheral wall 233 is a first arc wall 2331; for another example, the first end wall 232 and the first peripheral wall 233 are both rectangular, the first peripheral wall 233 has four walls located at different orientations, the two walls are disposed opposite to each other in the length direction X of the end cover 23, and the two walls are disposed in the width direction Y of the end cover 23, and one of the walls may be the first arc wall 2331, or two of the walls may be the first arc wall 2331, or three of the walls may be the first arc wall 2331, or four of the walls may be the first arc wall 2331.

The first arc wall 2331 extends from the first end wall 232 to the first body part 231 along a first arc trajectory, and it may be understood that two ends of the first arc wall 2331 on the first arc trajectory are connected to the first end wall 232 and the first body part 231, respectively. The first arc wall 2331 has an arc cross section, and the cross section of the first arc wall 2331 is a plane arranged in the thickness direction Z of the end cover 23. The first peripheral wall 233 as a rectangle and a wall at one side of the first peripheral wall 233 in the width direction Y of the end cover 23 as the first arc wall 2331 are taken as an example, the cross section of the first arc wall 2331 is a plane that is arranged along the thickness direction Z of the end cover 23 and is perpendicular to the length direction X of the end cover 23.

The first end wall 232 and the first peripheral wall 233 jointly define a first accommodation space 234, and the first accommodation space 234 is configured to accommodate at least a part of the tab 221. Only the positive electrode tab 221a may be accommodated in the first accommodation space 234, only the negative electrode tab 221b may be accommodated in the first accommodation space 234, or both the positive electrode tab 221a and the negative electrode tab 221b may be accommodated in the first accommodation space 234. For example, the positive electrode tab 221a and the negative electrode tab 221b are located at two ends of the electrode assembly 22 in the thickness direction Z of the end cover 23, respectively, and the positive electrode tab 221a may be accommodated in the first accommodation space 234, or the negative electrode tab 221b may be accommodated in the first accommodation space 234. For another example, as shown in FIG. 3, both the positive electrode tab 221a and the negative electrode tab 221b are located at the same end of the electrode assembly 22 in the thickness direction Z of the end cover 23, and both the positive electrode tab 221a and the negative electrode tab 221b are accommodated in the first accommodation space 234 (not shown in FIG. 3).

In an embodiment where a pressure relief mechanism 27 is disposed on the end cover 23, the pressure relief mechanism 27 may be mounted to the first end wall 232. In an embodiment where the end cover 23 is provided with the positive electrode terminal 25a and the negative electrode terminal 25b, the positive electrode terminal 25a and the negative electrode terminal 25b may be disposed on the first end wall 232 or the first body part 231. Illustratively, in FIG. 3, the positive electrode terminal 25a and the negative electrode terminal 25b are both disposed on the first body part 231 with the convex hull located between the positive electrode terminal 25a and the negative electrode terminal 25 b.

As shown in FIG. 4, in an embodiment where the electrode terminals 25 (the positive electrode terminal 25a and the negative electrode terminal 25 b) are connected to the tabs 221 (the positive electrode tab 221a and the negative electrode tab 221b) through the current collecting member 26, a part that is of the current collecting member 26 and that is configured to connect to the tabs 221 is accommodated in the first accommodation space 234.

In the embodiment of the present application, a length direction X of the end cover 23 is a length direction X of the first body part 231, a width direction Y of the end cover 23 is a width direction Y of the first body part 231, and a thickness direction Z of the end cover 23 is a thickness direction Z of the first body part 231.

In the embodiment of the present application, the first arc wall 2331 of the first peripheral wall 233 extends from the first end wall 232 to the first body part 231 along the first arc trajectory, so that the first end wall 232 smoothly transits to the first body part 231 through the first arc wall 2331, the stress concentration caused by right-angle arrangement of the first peripheral wall 233 and the first body part 231 or right-angle arrangement of the first peripheral wall 233 and the first end wall 232 is improved, the anti-damage capability of a connection position between the first peripheral wall 233 and the first body part 231 or a connection position between the first peripheral wall 233 and the first end wall 232 is improved, and the service life of the battery cell 20 is prolonged.

In addition, the first arc wall 2331 extends from the first end wall 232 to the first body part 231 along the first arc trajectory, so that the first accommodation space 234 defined jointly by the first peripheral wall 233 and the first end wall 232 can be enlarged to accommodate more parts of the tab 221, which is beneficial to increase the energy density of the battery cell 20.

In some embodiments, an outer surface of the first arc wall 2331 is tangent to an outer surface of the first body part 231; and/or an inner surface of the first arc wall 2331 is tangent to an inner surface of the first body part 231.

The outer surface of the first arc wall 2331 is a surface that is of the first arc wall 2331 and that faces outside the battery cell 20, and the inner surface of the first arc wall 2331 is a surface that is of the first arc wall 2331 and that faces inside of the battery cell 20. The first peripheral wall 233 as a rectangle is taken as an example, both the outer surface and the inner surface of the first arc wall 2331 are arc surfaces.

The outer surface of the first body part 231 is a surface that is of the first body part 231 and that faces outside of the battery cell 20, and the inner surface of the first body part 231 is a surface that is of the first body part 231 and that faces inside of the battery cell 20. The first body part 231 as a rectangular plate is taken as an example, both the outer surface and the inner surface of the first body part 231 are flat surfaces.

For example, in FIG. 4, an outer surface of the first arc wall 2331 is tangent to an outer surface of the first body part 231, and an inner surface of the first arc wall 2331 is tangent to an inner surface of the first body part 231. The thickness of the first arc wall 2331 is equal to the thickness of the first body part 231.

In this embodiment, the outer surface of the first arc wall 2331 is tangent to the outer surface of the first body part 231, and the inner surface of the first arc wall 2331 is tangent to the inner surface of the first body part 231, so that the stress concentration at a connection position between the first arc wall 2331 and the first body part 231 is not likely to occur, and the bursting pressure at a connection position between the first arc wall 2331 and the first body part 231 is increased.

In some embodiments, still referring to FIG. 4, a circle center of the first arc trajectory is located outside the battery cell 20.

The first peripheral wall 233 as a rectangle is taken as an example, at least one of the first peripheral walls 233 is a first arc wall 2331, and a circle center of the first arc trajectory is located outside the battery cell 20, that is, an axis of the first arc wall 2331 is located outside the battery cell 20.

In an embodiment where an outer surface of the first arc wall 2331 is tangent to an outer surface of the first body part 231; and/or an inner surface of the first arc wall 2331 is tangent to an inner surface of the first body part 231, a circle center of the first arc trajectory is located outside the battery cell 20.

The circle center of the first arc trajectory is located outside the battery cell 20, so that the first arc wall 2331 is concave and bent toward inside the battery cell 20, and a space outside the battery cell 20 that is occupied by the end cover 23 is reduced; and meanwhile, a connection position between the first arc wall 2331 and the first body part 231 is relatively smooth, and the stress concentration is not likely to occur at a connection position between the first arc wall 2331 and the first body part 231.

In other embodiments, the circle center of the first arc trajectory may be located inside the battery cell 20, so that the first arc wall 2331 is concave and bent toward outside of the battery cell 20. In this case, the outer surface of the first arc wall 2331 can be tangent to the outer surface of the end wall, and the inner surface of the first arc wall 2331 can also be tangent to the inner surface of the end wall.

In some embodiments, referring to FIG. 5, FIG. 5 is a sectional view of an end cover 23 shown in FIG. 4, and a central angle α of the first arc wall 2331 is not greater than 90 degrees. That is, the central angle α of the first arc wall 2331 may be equal to or smaller than 90 degrees.

The central angle α of the first arc wall 2331 is a central angle α of an arc segment corresponding to the first arc wall 2331 on the first arc trajectory. The first arc wall 2331 has two ends on the first arc trajectory, which are a first end 2331a and a second end 2331b, respectively; the first end 2331a is connected to the first end wall 232, the second end 2331b is connected to the first body part 231, a line connecting the first end 2331a and the circle center of the first arc trajectory is a first line segment, a line connecting the second end 2331b and the circle center of the first arc trajectory is a second line segment, and an included angle between the first line segment and the second line segment is a central angle α of the first arc wall 2331.

In this embodiment, the central angle α of the first arc wall 2331 is not greater than 90 degrees, so that the first end wall 232 transits more gently to the first body part 231 through the first arc wall 2331. In the case that an axis of the first arc wall 2331 is located outside the battery cell 20, this structure can increase the first accommodation space 234 defined jointly by the first peripheral wall 233 and the first end wall 232 to accommodate more parts of the tab 221, which is beneficial to increase the energy density of the battery cell 20.

In some embodiments, referring to FIG. 4 and 5, the first peripheral wall 233 comprises two first arc walls 2331, and the two first arc walls 2331 are arranged along a width direction Y of the end cover 23.

The first peripheral wall 233 comprises two first arc walls 2331 arranged in a width direction Y of the end cover 23, that is, at least two walls of the first peripheral wall 233 arranged in the width direction Y of the end cover 23 are the first arc walls 2331. The first peripheral wall 233 as a rectangle is taken as an example, two walls of the first peripheral wall 233 arranged in a length direction X of the end cover 23 may be the first arc walls 2331, that is, four walls of the first peripheral wall 233 are all the first arc walls 2331.

In the case that the first body part 231 is welded to the housing 21, a welding position between the first body part 231 and the housing 21 is relatively close to the first peripheral wall 233 in the width direction Y of the end cover 23, and a connection position between the first body part 231 to the first peripheral wall 233 is easily affected by the welding of the first body part 231 and the housing 21, so that the anti-damage capability of a connection position between the first body part 231 and the first peripheral wall 233 further worse, and the bursting pressure at this position is insufficient.

In this embodiment, the two walls that are of the first peripheral wall 233 and that are arranged in the width direction Y of the end cover 23 are set as the first arc walls 2331, so that the two ends of the first end wall 232 in the width direction Y of the end cover 23 smoothly transit to the first body part 231 through the two first arc walls 2331, respectively, a connection position between the first peripheral wall 233 and the first body part 231 in the width direction Y of the end cover 23 is not easily subjected to stress concentration, and the connection position has sufficient bursting pressure even if being affected by the welding of the first body part 231 and the housing 21.

In some embodiments, still referring to FIG. 5, two first arc walls 2331 are symmetrically distributed along the width direction Y of the end cover 23.

The two first arc walls 2331 are symmetrically distributed with respect to the symmetry plane, and the symmetry plane is perpendicular to the width direction Y of the end cover 23.

In this embodiment, the two first arc walls 2331 are symmetrically distributed in the width direction of the end cover 23, so that the two first arc walls 2331 are the same in shape and size, the anti-damage capability of the connection positions between the two first arc walls 2331 and the first body part 231 is basically same, and the anti-damage capability of the connection positions between the two first arc walls 2331 and the end wall is basically same.

In some embodiments, still referring to FIG. 4, the battery cell 20 further comprises an insulation kit 24, and the insulation kit 24 is configured to separate the end cover 23 and the electrode assembly 22.

The insulation kit 24 is disposed on one side that is of the end cover 23 and that faces the electrode assembly 22, the insulation kit 24 is made of an insulating material, and the insulation kit 24 may be made of rubber, plastic, or the like.

The insulation kit 24 plays a role in separating the end cover 23 from the electrode assembly 22 so as to reduce the risk of a short circuit of a positive electrode and a negative electrode caused by the contact of the tab 221 of the electrode assembly 22 with the end cover 23.

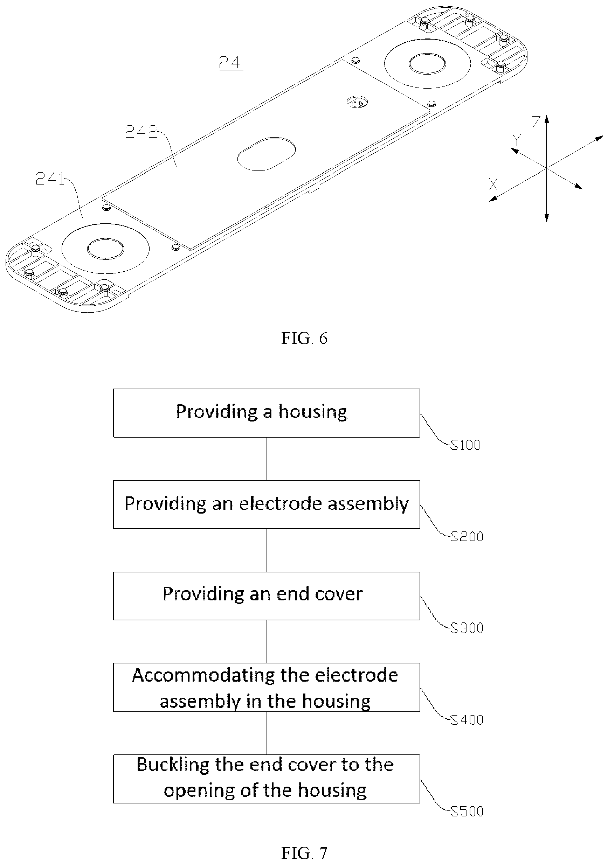

In some embodiments, referring to FIG. 4 and FIG. 6, FIG. 6 is a schematic diagram of a structure of an insulation kit 24 shown in FIG. 4, and the insulation kit 24 comprises a second body part 241 and a protrusion part 242. The second body part 241 is disposed at one side that is of the first body part 231 and that faces the electrode assembly 22 in the thickness direction Z. The protrusion part 242 extends from the second body part 241 into the first accommodation space 234 in a direction away from the electrode assembly 22, wherein a second accommodation space 243 is formed inside the protrusion part 242, and the second accommodation space 243 is configured to accommodate at least a part of the tab 221.

The second body part 241 may be of a plate structure, for example, the second body part 241 may be a circular plate or a rectangular plate. In the case that the first body part 231 is of a rectangular plate, the second body part 241 may also be of a rectangular plate; in the case that the first body part 231 is of a circular plate, the second body part 241 may also be of a rectangular plate. The second body part 241 is located on one side that is of the first body part 231 and that faces the electrode assembly 22 in the thickness direction Z of the end cover 23, and the second body part 241 may abut against an inner surface of the first body part 231.

The protrusion part 242 is a part of the end cover 23 protruding from the second body part 241, and the protrusion part 242 may be in various shapes, such as circular and rectangular. The shape of the protrusion part 242 may be set according to the shape of the first peripheral wall 233 of the end cover 23. For example, if the first peripheral wall is circular, the protrusion part 242 may be set as circular; for another example, if the first peripheral wall is rectangular, the protrusion part 242 may also be set as rectangular.

A second accommodation space 243 is formed inside the protrusion part 242, and an opening position of the second accommodation space 243 is formed at one side that is of the second body part 241 and that faces the electrode assembly 22 in the thickness direction Z of the end cover 23. The second accommodation space 243 can accommodate at least a part of the tab 221. Certainly, only the positive electrode tab 221a may be accommodated in the second accommodation space 243, only the negative electrode tab 221b may be accommodated in the second accommodation space 243, or both the positive electrode tab 221a and the negative electrode tab 221b may be accommodated in the second accommodation space 243. For example, the positive electrode tab 221a and the negative electrode tab 221b of the electrode assembly 22 are located at two ends of the electrode assembly 22 in the thickness direction Z of the end cover 23, respectively, and the positive electrode tab 221a may be accommodated in the second accommodation space 243, or the negative electrode tab 221b may be accommodated in the second accommodation space 243. For another example, both the positive electrode tab 221a and the negative electrode tab 221b of the electrode assembly 22 are located at the same end of the electrode assembly 22 in the thickness direction Z of the end cover 23, and both the positive electrode tab 221a and the negative electrode tab 221b are accommodated in the second accommodation space 243.

In this embodiment, the protrusion part 242 of the insulation kit 24 extends into the first accommodation space 234, which reduces the overall size of the insulation kit 24 and the end cover 23 in the thickness direction Z of the end cover 23, so that the structure of the insulation kit 24 and the end cover 23 is more compact. A second accommodation space 243 is formed inside the protrusion part 242, at least a part of the tab 221 is accommodated in the second accommodation space 243, and a space inside the housing 21 that is occupied by the tab 221 is reduced, so that more space is provided for a main body part of the electrode assembly 22, and the improvement of the energy density of the battery cell 20 is facilitated.

In some embodiments, still referring to FIG. 4, the protrusion part 242 comprises a second end wall 2421 and a second peripheral wall 2422. The second end wall 2421 is farther from the electrode assembly 22 than the second body part 241 in the thickness direction Z. The second peripheral wall 2422 is disposed around an edge of the second end wall 2421 and connected to the second body part 241, wherein the second peripheral wall 2422 and the second end wall 2421 jointly define the second accommodation space 243. The second peripheral wall 2422 comprises a second arc wall 2422a, the second arc wall 2422a corresponds to the first arc wall 2331 and extends from the second end wall 2421 to the second body part 241 along a second arc trajectory so as to avoid the tab 221.

A part of the second peripheral wall 2422 may be a second arc wall 2422a, or the entire second peripheral wall 2422 may be a second arc wall 2422a. For example, the protrusion part 242 is circular, and the entire second peripheral wall 2422 is a second arc wall 2422a; for another example, the protrusion part 242 is rectangular, and the second peripheral wall 2422 has four walls located at different orientations, one of the walls may be the second arc wall 2422a, or a plurality of the walls may be the second arc wall 2422a.

The second arc wall 2422a corresponds to the first arc wall 2331, that is, the second arc wall 2422a is in a one-to-one correspondence with the first arc wall 2331. For example, if one wall of the first peripheral wall 233 is a first arc wall 2331, one wall of the second peripheral wall 2422 is a second arc wall 2422a; and for another example, two walls of the first peripheral wall 233 are the first arc wall 2331, and two walls of the second peripheral wall 2422 are the second arc wall 2422a.

The second arc wall 2422a extends from the second end wall 2421 to the second body part 241 along a second arc trajectory, and it may be understood that two ends of the second arc wall 2422a on the second arc trajectory are connected to the second end wall 2421 and the second body part 241, respectively. The second arc wall 2422a has an arc cross section, and the cross section of the second arc wall 2422a is a plane arranged in the thickness direction Z of the end cover 23. The protrusion part 242 as rectangular and a wall at one side of the second peripheral wall 2422 in the width direction Y of the end cover 23 as the second arc wall 2422a are taken as an example, the cross section of the second arc wall 2422a is a plane that is arranged along the thickness direction Z of the end cover 23 and is perpendicular to the length direction X of the end cover 23.

For example, the second arc trajectory and the first arc trajectory are concentrically arranged.

For a conventional battery cell 20, if the tab 221 is squeezed by the insulation kit 24, the tab 221 may be inserted into the main body part of the electrode assembly 22, and the separator may be punctured, thereby causing a short circuit of a positive electrode and a negative electrode.

In this embodiment, the second arc wall 2422a extends from the second end wall 2421 to the second body part 241 along the second arc trajectory, so that the arc structure of the second arc wall 2422a can avoid the tab 221, and the risk of the insulation kit 24 squeezing the tab 221 can be effectively reduced.

In some embodiments, still referring to FIG. 4, the second arc wall 2422a is attached to the first arc wall 2331.

The second arc wall 2422a is attached to the first arc wall 2331, that is, the outer surface of the second arc wall 2422a is attached to the inner surface of the first arc wall 2331, so that a profile of the second arc wall 2422a adapts to a profile of the first arc wall 2331.

In the case that the second arc wall 2422a is attached to the first arc wall 2331, the second body part 241 may be attached to the first body part 231, and the second end wall 2421 may be attached to the first end wall 232.

In this embodiment, the second arc wall 2422a is attached to the first arc wall 2331, so that the second arc wall 2422a and the first arc wall 2331 are more compact, the second accommodation space 243 joint defined by the second peripheral wall 2422 and the second end wall 2421 is enlarged, and the avoidance of the tab 221 by the second arc wall 2422a is facilitated.

In some embodiments, still referring to FIG. 4, the second peripheral wall 2422 comprises two second arc walls 2422a, the two second arc walls 2422a are arranged along the width direction Y of the end cover 23, one second arc wall 2422a is configured to avoid the tab 221 that is on one side of the electrode assembly 22 in the width direction Y, and the other second arc wall 2422a is configured to avoid the tab 221 that is on the other side of the electrode assembly 22 in the width direction Y.

The second peripheral wall 2422 comprises two second arc walls 2422a arranged in the width direction Y of the end cover 23, that is, at least two walls of the second peripheral wall 2422 arranged in the width direction Y of the end cover 23 are the second arc wall 2422a. The protrusion part 242 as rectangle is taken as an example, two walls of the second peripheral wall 2422 arranged in the length direction X of the end cover 23 may also be the second arc wall 2422a. It may be understood that two walls of the second peripheral wall 2422 in the width direction Y of the end cover 23 are the second arc wall 2422a, and then two walls of the first peripheral wall 233 in the width direction Y correspond to the first arc wall 2331.

In the width direction Y, the two second arc walls 2422a of the second peripheral wall 2422 correspond to avoiding the tabs 221 on two sides of the electrode assembly 22. The positive electrode tab 221a and the negative electrode tab 221b located at the same end of the electrode assembly 22 in the thickness direction Z of the end cover 23 is taken as an example, one second arc wall 2422a is configured to avoid the positive electrode tab 221a and the negative electrode tab 221b on one side of the electrode assembly 22 in the width direction Y, and the other second arc wall 2422a is configured to avoid the positive electrode tab 221a and the negative electrode tab 221b on the other side of the electrode assembly 22 in the width direction Y.

In this embodiment, the two second arc walls 2422a of the second peripheral wall 2422 can avoid tabs 221 that are on two sides of the electrode assembly 22 in the width direction Y of the end cover 23, respectively, so that the tabs 221 that are on two sides of the electrode assembly 22 in the width direction Y of the end cover 23 are not easily squeezed by the insulation kit 24.

In some embodiments, the first body part 231 is welded to the housing 21.

A weld mark where the first body part 231 is welded to the housing 21 is located at an edge of the first body part 231, and the weld mark extends along a circumferential direction of the opening of the housing 21.

The first body part 231 is connected to the housing 21 in a welding mode, so that the firmness of the first body part 231 after the first body part is connected to the housing 21 is ensured, and meanwhile, the sealing performance between the first body part 231 and the housing 21 can be ensured.

An embodiment of the present application provides a battery 100 comprising a box body 10 and a battery cell 20 provided in any one of the embodiments, where the box body 10 is configured to accommodate the battery cell 20.

An embodiment of the present application provides an electrical device comprising the battery 100 provided in any one of the embodiments.

In addition, referring to FIG. 4, an embodiment of the present application provides a square battery cell comprising a housing 21, an electrode assembly 22, an end cover 23, and an insulation kit 24, wherein the electrode assembly 22 is accommodated in the housing 21, the end cover 23 is welded to an opening of the housing 21, and the insulation kit 24 is configured to separate the end cover 23 from the electrode assembly 22.

The end cover 23 comprises a first body part 231, a first end wall 232, and a first peripheral wall 233, the first peripheral wall 233 is disposed around an edge of the first end wall 232 and is connected to the first body part 231, and the first peripheral wall 233 and the first end wall 232 jointly define a first accommodation space 234. The first peripheral wall 233 comprises two first arc walls 2331, the first arc wall 2331 extends from the first end wall 232 to the first body part 231 along a first arc trajectory, a circle center of the first arc trajectory is located outside the square battery cell, and the two first arc walls 2331 are arranged along the width direction Y of the end cover 23. The insulation kit 24 comprises a second body part 241, a second end wall 2421, and a second peripheral wall 2422, the second peripheral wall 2422 is disposed around an edge of the second end wall 2421 and is connected to the second body part 241, the second end wall 2421 and the second peripheral wall 2422 are accommodated in the first accommodation space 234, the second peripheral wall 2422 and the second end wall 2421 jointly define a second accommodation space 243, and the second accommodation space 243 is configured to accommodate at least a part of the tab 221. The second peripheral wall 2422 comprises two second arc walls 2422a, the second arc wall 2422a is attached to the first arc wall 2331, the two second arc walls 2422a are arranged in the width direction Y of the end cover 23, and the two second arc walls 2422a are configured to avoid the tabs 221 that are on two sides of the electrode assembly 22 in the width direction Y of the end cover 23, respectively.

In such a square battery cell, stress concentration is not likely to occur at a connection position between the first peripheral wall 233 and the first main body part 231 in the width direction Y of the end cover 23, and the influence of the stress concentration on the end cover 23 due to welding of the end cover 23 and the housing 21 is reduced, thereby improving the service life of the battery cell 20. The second arc wall 2422a of the insulation kit 24 can avoid the tabs 221 that are on two sides of the electrode assembly 22 in the width direction Y of the end cover 23, thereby reducing the risk that the insulation kit 24 squeezes the tabs 221.

Referring to FIG. 7, FIG. 7 is a flowchart of a manufacturing method for a battery cell 20 according to some embodiments of the present application. An embodiment of the present application provides a manufacturing method for a battery cell 20, which comprises:
S100: providing a housing 21, wherein the housing 21 has an opening;
S200: providing an electrode assembly 22, wherein the electrode assembly 22 has a tab 221;
S300: providing an end cover 23;
S400: accommodating the electrode assembly 22 in the housing 21; and
S500: buckling the end cover 23 to the opening of the housing 21.

The end cover 23 comprises a first body part 231, a first end wall 232, and a first peripheral wall 233. The first body part 231 is configured to connect the housing 21. The first end wall 232 is farther from the electrode assembly 22 than the first body part 231 in a thickness direction Z of the end cover 23. The first peripheral wall 233 is disposed around an edge of the first end wall 232 and connected to the first body part 231, and the first peripheral wall 233 and the first end wall 232 jointly define a first accommodation space 234, wherein the first accommodation space 234 is used to accommodate at least a part of a tab 221. The first peripheral wall 233 comprises a first arc wall 2331, wherein the first arc wall 2331 extends from the first end wall 232 to the first body part 231 along a first arc trajectory.

In the above method, the step S100, step S200, and step S300 are not limited. For example, the step S300 may be executed first, then the step S200 is executed, and next the step S100 is executed.

It should be noted that, for the relevant structures of the battery cell 20 manufactured by the manufacturing method provided in the embodiments, reference may be made to the battery cell 20 provided in the embodiments. Details are not described herein.

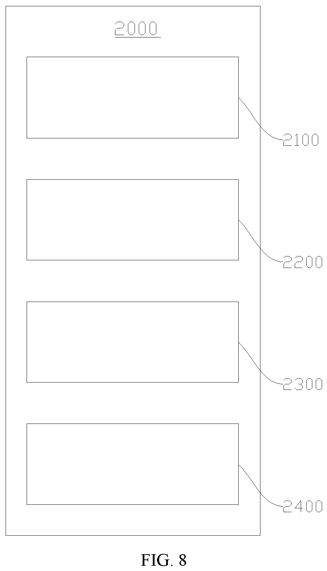

Referring to FIG. 8, FIG. 8 is a schematic block diagram of a manufacturing device 2000 for a battery cell 20 according to some embodiments of the present application. An embodiment of the present disclosure further provides a manufacturing device 2000 for a battery cell 20. The manufacturing device 2000 comprises a first providing apparatus 2100, a second providing apparatus 2200, a third providing apparatus 2300, and an assembly apparatus 2400.

The first providing apparatus 2100 is configured to provide a housing 21, and the housing 21 has an opening. The second providing apparatus 2200 is configured to provide an electrode assembly 22, and the electrode assembly 22 has a tab 221. The third providing apparatus 2300 is configured to provide an end cover 23. The assembly apparatus 2400 is configured to accommodate an electrode assembly 22 in the housing 21; and the assembly apparatus 2400 is further configured to buckle the end cover 23 to the opening.

The end cover 23 comprises a first body part 231, a first end wall 232, and a first peripheral wall 233. The first body part 231 is configured to connect the housing 21. The first end wall 232 is farther from the electrode assembly 22 than the first body part 231 in a thickness direction Z of the end cover 23. The first peripheral wall 233 is disposed around an edge of the first end wall 232 and connected to the first body part 231, and the first peripheral wall 233 and the first end wall 232 jointly define a first accommodation space 234, wherein the first accommodation space 234 is used to accommodate at least a part of a tab 221. The first peripheral wall 233 comprises a first arc wall 2331, wherein the first arc wall 2331 extends from the first end wall 232 to the first body part 231 along a first arc trajectory.

It should be noted that, for the relevant structures of the battery cell 20 manufactured by the manufacturing device 2000 provided in the embodiments, reference may be made to the battery cell 20 provided in the embodiments. Details are not described herein.

It should be noted that the embodiments and features in the embodiments of the present application can be combined with each other without conflict.

The foregoing embodiments are merely intended for describing the technical solutions of the present application, rather than limiting the present application. For those skilled in the art, the present invention may have various modifications and variations. Any modification, equivalent replacement, improvement, or the like made without departing from the spirit and principle of the present application shall fall within the protection scope of the present application.

## Claims

1. A battery cell, comprising:
a housing having an opening;
an electrode assembly having a tab, wherein the electrode assembly is accommodated in the housing; and
an end cover configured to buckle to the opening, wherein the end cover comprises:
a first body part configured to connect the housing,
a first end wall, wherein the first end wall is farther from the electrode assembly than the first body part in a thickness direction of the end cover, and
a first peripheral wall disposed around an edge of the first end wall and connected to the first body part, wherein the first peripheral wall and the first end wall jointly define a first accommodation space configured to accommodate at least a part of the tab,
wherein the first peripheral wall comprises a first arc wall extending from the first end wall to the first body part along a first arc trajectory.

2. The battery cell according to claim 1, wherein an outer surface of the first arc wall is tangent to an outer surface of the first body part; and/or an inner surface of the first arc wall is tangent to an inner surface of the first body part.

3. The battery cell according to claim 1 or 2, wherein a circle center of the first arc trajectory is located outside the battery cell.

4. The battery cell according to any one of claims 1 to 3, wherein a central angle of the first arc wall is not greater than 90 degrees.

5. The battery cell according to any one of claims 1 to 4, wherein the first peripheral wall comprises two first arc walls, and the two first arc walls are arranged along a width direction of the end cover.

6. The battery cell according to claim 5, wherein the two first arc walls are symmetrically distributed in the width direction.

7. The battery cell according to any one of claims 1 to 6, wherein the battery cell further comprises:
an insulation kit configured to separate the end cover and the electrode assembly.

8. The battery cell according to claim 7, wherein the insulation kit comprises:
a second body part disposed on one side that is of the first body part and that faces the electrode assembly in the thickness direction; and
a protrusion part extending from the second body part into the first accommodation space in a direction away from the electrode assembly, wherein a second accommodation space is formed inside the protrusion part, and the second accommodation space is configured to accommodate at least a part of the tab.

9. The battery cell according to claim 8, wherein the protrusion part comprises:
a second end wall, wherein the second end wall is farther from the electrode assembly than the second body part in the thickness direction; and
a second peripheral wall disposed around an edge of the second end wall and connected to the second body part, wherein the second peripheral wall and the second end wall jointly define the second accommodation space,
wherein the second peripheral wall comprises a second arc wall, and the second arc wall corresponds to the first arc wall and extends from the second end wall to the second body part along a second arc trajectory so as to avoid the tab.

10. The battery cell according to claim 9, wherein the second arc wall attaches to the first arc wall.

11. The battery cell according to claim 9 or 10, wherein the second peripheral wall comprises two second arc walls, and the two second arc walls are arranged along the width direction of the end cover, wherein one of the second arc walls is configured to avoid a tab that is on one side of the electrode assembly in the width direction, and the other second arc wall is configured to avoid a tab that is on the other side of the electrode assembly in the width direction.

12. The battery cell according to any one of claims 1 to 11, wherein the first body part is welded to the housing.

13. A battery, comprising:
the battery cell according to any one of claims 1 to 12; and
a box body configured to accommodate the battery cell.

14. An electrical device, comprising the battery according to claim 13.

15. A manufacturing method for a battery cell, wherein the manufacturing method comprises:
providing a housing having an opening;
providing an electrode assembly having a tab;
providing an end cover;
accommodating the electrode assembly in the housing; and
buckling the end cover to the opening;
wherein the end cover comprises:
a first body part configured to connect the housing,
a first end wall, wherein the first end wall is farther from the electrode assembly than the first body part in a thickness direction of the end cover, and
a first peripheral wall disposed around an edge of the first end wall and connected to the first body part, wherein the first peripheral wall and the first end wall jointly define a first accommodation space configured to accommodate at least a part of the tab,
wherein the first peripheral wall comprises a first arc wall extending from the first end wall to the first body part along a first arc trajectory.

16. A manufacturing device for a battery cell, wherein the manufacturing device comprises:
a first providing apparatus configured to provide a housing having an opening;
a second providing apparatus configured to provide an electrode assembly having a tab;
a third providing apparatus configured to provide an end cover; and
an assembly apparatus configured to accommodate the electrode assembly in the housing and further configured to buckle the end cover to the opening;
wherein the end cover comprises:
a first body part configured to connect the housing,
a first end wall, wherein the first end wall is farther from the electrode assembly than the first body part in a thickness direction of the end cover, and
a first peripheral wall disposed around an edge of the first end wall and connected to the first body part, wherein the first peripheral wall and the first end wall jointly define a first accommodation space configured to accommodate at least a part of the tab,
wherein the first peripheral wall comprises a first arc wall extending from the first end wall to the first body part along a first arc trajectory.
